# EUROPEAN PATENT SPECIFICATION

(11) **EP 3 374 252 B1**
(45) Date of publication and mention of the grant of the patent: **26.02.2020**
(21) Application number: 16805734.7
(22) Date of filing: 11.11.2016
(51) Int. Cl.: B62J 9/00, B62J 11/00

(54) **CASE HOLDER DEVICE FOR MOTORCYCLES**
BEFESTIGUNGSVORRICHTUNG FÜR EINEN KOFFER FÜR MOTORRÄDER
SUPPORT D'UN COFFRE POUR MOTOCYCLETTES

(30) Priority: 12.11.2015 IT UB20155505
(43) Date of publication of application: 19.09.2018
(73) Proprietor: Qooder S.A., 6833 Vacallo (CH)
(72) Inventor: MORONI, Marco, 21050 Marnate (VA) (IT); PANZIERA, Edoardo Giacomo, 6945 Origlio (CH); MARABESE, Riccardo, 21013 Gallarate (VA) (IT)
(74) Representative: Rondano, Davide
(86) International application number: PCT/EP2016/077430
(87) International publication number: WO 2017/081251

(56) References cited:
- DE-A1-102006 046 005
- DE-A1-102013 223 317
- JP-A- 2014 213 733
- US-A1- 2013 134 747
- US-A1- 2013 284 782

## Description

### Field of the Invention

The present invention relates to a case and/or luggage holder device for motorcycles, said device comprising a fastening structure for fastening said device to a motorcycle, and support means for the support of at least one trunk or at least one suitcase.

### Background art

The use is known in the field of motorcycles, of accessories such as suitcases or travel bags and trunks, which are adapted both to be transported by hand and also to be fastened, in particular removably engaged, to the motorcycle by means of systems which precisely allow the quick engagement, and just as quick, a release thereof.

Such systems or case and/or trunk and/or bag holder devices of known type substantially may be divided into two groups.

A first group comprises devices provided with a support frame which is fastened to the motorcycle, usually in the rear area, in particular laterally with respect to the back end (rear axle) and therefore to the saddle of the vehicle, and allows the engagement of suitcases which therefore, once secured, are transported so as to protrude laterally with respect to the vehicle, hunging on the support frame.

A second group comprises devices provided with a support plate which is fastened to the motorcycle, also in this case in the rear area of the back end (rear axle), but here in the rear position (behind) with respect to the saddle, and is generally intended to protrudingly support a trunk, that is one suitcase alone having such shape and dimensions so as to be arranged resting on the plate. Essentially, while the accessories such as suitcases and/or trunks are "hung" on the device in the case of devices of the first type, the aforesaid accessories are rested on the support plate and secured thereto in the case of devices of the second type, wherein in this second case the lateral volume or bulk is avoided which is typical of suitcases transported by means of devices of the first type. However, in the case of devices of the second type, the driver inevitably perceives a worsening of the driving conditions of the vehicle as a result of the mass of the load or baggage (trunk and/or suitcase) transported and protrudingly secured and in remote position from the center (of gravity) of the motorcycle.

It is indeed a commonly perceived experience for a trunk to worsen the driving feeling in particular in turns, both entering and driving through the turn, under conditions of tilted vehicle.

Moreover, although generally the devices of the second group or type are for the most part intended to be used on scooters and motorcycles used in the city (with reduced and not "sports" performance), it is not at all infrequent the use of devices of the second type also on large cylinder motorcycles with high performances, and even on sports motorcycles, to transport suitcases and/or trunks in the rear protruding position wherein, in the case of motorcycles of this type, the worsening perception of the driving conditions is even more significant, in particular due to the reduced weight of the motorcycles and the driving position.

Further examples of case holder devices for motorcycles according to the prior art are known from prior art documents DE 102013223317, JP 2014213733, DE 102006046005, US 2013/134747 and US 2013/284782.

### Summary of the invention

It is therefore the main object of the present invention to overcome or at least minimize the drawbacks and/or disadvantages encountered in the devices according to the prior art and summarized above.

In particular, a first object of the present invention is to make available a case holder and/or luggage holder device for motorcycles, which is both adapted to be applied (fastened) to a motorcycle and which allows both the side volume (and the uneven or asymmetrical distribution of the load, in the case of suitcases or trunks applied only on one side of the motorcycle) and the perception of worsening of the guide conditions due to the loads transported protruding rearwardly, to be avoided, especially in absence of a passenger.

It is also an object of the present invention to make available a case holder and/ or luggage holder device for motorcycles, which allows the user to engage and release one or more suitcases or one or more trunks in a simple and quick manner, and which simultaneously allows distributing and/or positioning the load symmetrically (with respect to the longitudinal symmetry plane of the motorcycle), substantially as in the case of traditional devices of the second type, but which also allows varying the position of the load according to the presence or absence of a passenger. It is a further object of the present invention to also make available a case holder and/or luggage holder device for motorcycles, which can be switched between at least two positions and by means of which, with the device in one position, the load or baggage is positioned within the outline of the motorcycle (according to a top view), with significant advantages in terms of substantially unaltered driving conditions but also for example during the step of parking, while with the device in the second position, the load or baggage is (possibly) positioned outside the outline, but the device itself performs the functions of support element (practically of backrest) for a passenger.

It is a further object of the present invention to provide a case holder and/or luggage holder device for motorcycles, assuring the support and engagement and release of suitcases or trunks to/from a motorcycle and which, with the suitcases or trunks positioned within the outline of the motorcycle, allows said suitcases or trunks to be positioned behind the driver, substantially at and on the passenger seat, so as to move the mass transported close to the center of the vehicle, thus improving the driving conditions because the mass of the suitcases or trunks is precisely conducted to the position of the passenger. It is a further object of the present invention to provide a case holder and/or luggage holder device for motorcycles, which allows reducing the overall volume or bulk of the vehicle, thus in particular reducing the longitudinal volume or bulk and promoting the possibility of parking, as indicated above. It is indeed known that parking spaces for motorcycles are generally delimited by spaces arranged parallel to one another and having longitudinal dimensions which are comparable to the average longitudinal volume or bulk of a motorcycle. When the motorcycle is equipped with a known protruding trunk, and such a trunk protrudes from the outline of the vehicle, even by 50 cm or more, this results in the parked vehicle not respecting the volume or bulk dimensions provided by the parking space.

The larger volume may also be dangerous even if the vehicle is parked stably on the middle kickstand, when present, because it is at risk of involuntary blows for example by other vehicles in transit when the parking space is provided on the side of the roadway.

The present invention is based on the consideration according to which the drawbacks detected in known devices may be overcome or at least effectively reduced by means of a device which allows the positioning of the load (one or more suitcases or one or more trunks) in at least two different positions according to whether or not a passenger is present, wherein, in the absence of the passenger, the load may be positioned on the rear portion of the frame of the motorcycle, while in the presence of the passenger, the load may be positioned so as to protrude rearwardly with respect to the motorcycle.

On the basis of the above considerations and taking into account the drawbacks and/or disadvantages detected in the devices according to the prior art, according to the present invention there is provided a case holder and/ or luggage holder device for motorcycles, as defined in independent claim 1.

Preferred embodiments of the present invention are laid down in the appended dependent claims.

A description will be given below, by way of non-limiting examples, of the embodiments of the device according to the present invention which are depicted in the drawings, wherein therefore the present invention is not limited to the embodiments depicted in the drawings.

The device according to the present invention is particularly advantageously applied in the case of the so-called "city" motorcycle such as scooters or the like, this in particular being the reason why the device according to the present invention is described below with particular reference to its applications to motorcycles of the aforesaid type. The possible applications of the device according to the present invention in any case comprise motorcycles of any type.

### Brief description of the drawings

In the drawings:
figure 1 shows a side view of a motorcycle equipped with a case holder and/or luggage holder device according to an embodiment of the present invention in a first position, in which said suitcases or trunks are positioned so as to protrude rearwardly from the vehicle;
figure 2 shows a side view of a motorcycle equipped with a case holder and/or luggage holder device according to an embodiment of the present invention in a second position, in which said suitcases or trunks are positioned within the outline of the vehicle, above the rear portion of the vehicle frame;
figure 3 shows a perspective assembly view of the case holder and/or luggage holder device according to an embodiment of the present invention, configured to support two suitcases (or to trunks) arranged side-by-side;
figure 4 shows a perspective assembly view of the case holder and/or luggage holder device according to an embodiment of the present invention, configured to support one trunk alone;
figure 5 shows a perspective and partial sectional view according to a vertical plane of the device according to the configuration in figure 3;
figure 6 shows a partial sectional side view according to a vertical plane of the device according to figure 5, in a configuration in which the device is locked;
figure 7 shows the same side view in figure 6, in a configuration in which the device is released;
figure 8 shows a detail of the movement means of the case holder and/ or luggage holder device according to an embodiment of the present invention;
figure 9 shows one of the components of the movement means of the case holder and/or luggage holder device according to an embodiment of the present invention, in greater detail;
figure 10 shows the same side view of a motorcycle equipped with the case holder and/or luggage holder device according to the embodiment of the present invention in figure 1, in which one suitcase alone is associated with the device and in which the device supports an accessory, in particular a top;
figure 11 shows the same side view of a motorcycle equipped with the case holder and/or luggage holder device according to the embodiment of the present invention in figure 2, in which one suitcase alone is associated with the device and in which the device supports an accessory, in particular a top.

### Detailed description of the invention

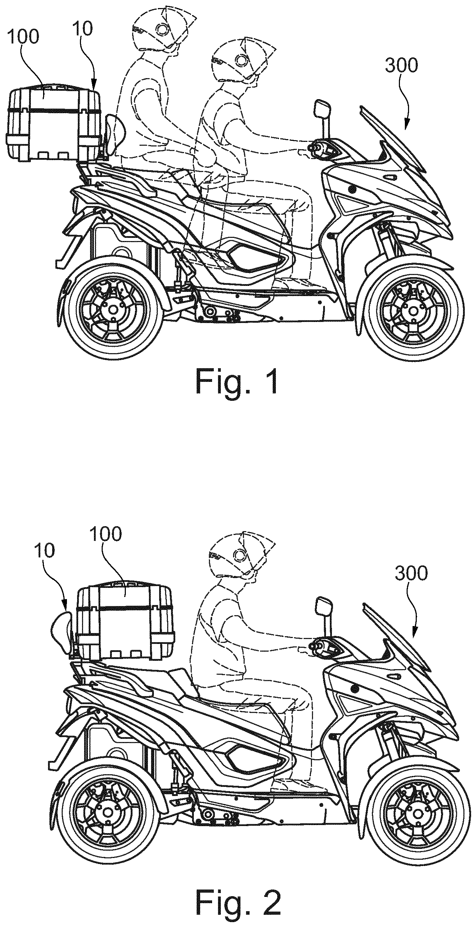

According to a preferred embodiment of the present invention illustrated in the mentioned drawings by way of a non-limiting example, the case holder and/or luggage holder device 10 according to the present invention, for the support and engagement/release of suitcases **100** or trunks **200** and adapted to be fastened to a motorcycle **300**, comprises a fastening structure to the vehicle **11**, support means **12** of said suitcases **100** or trunks **200** constrained to said support structure **11** in a rotatable manner. In greater detail, the device **10** according to the embodiment of the present invention depicted in the drawings is configured so that when said fastening structure **11** is connected to the vehicle, said support means **12** of said suitcase **100** or trunk **200** are rotatable with respect to said fastening structure **11** (and therefore with respect to the motorcycle 300) between a first position (depicted in figure 1) in which said suitcases **100** or trunks **200** are positioned so as to protrude in longitudinal direction and in particular, rearwardly from vehicle **300**, and a second position (depicted in figure 2) in which said suitcases **100** or trunks **200** are positioned within the outline of vehicle **300** (in longitudinal direction), above the rear portion of the vehicle frame, in particular at and on the portion of saddle dedicated to the passenger.

As clearly arising from the observation of figures 1 and 2, the device **10** according to the present invention allows being rotated between two positions, and therefore the suitcases 100 or trunks **200** attached thereto to be positioned in two corresponding positions, wherein in one position (figure 1) the normal use of the motorcycle is allowed with the transportation of the passenger (when this is required), while in the other position (figure 2), the load is positioned within the outline of vehicle 300 (at least in longitudinal direction), in particular above the rear portion of the vehicle where the portion of saddle intended for the passenger is positioned.

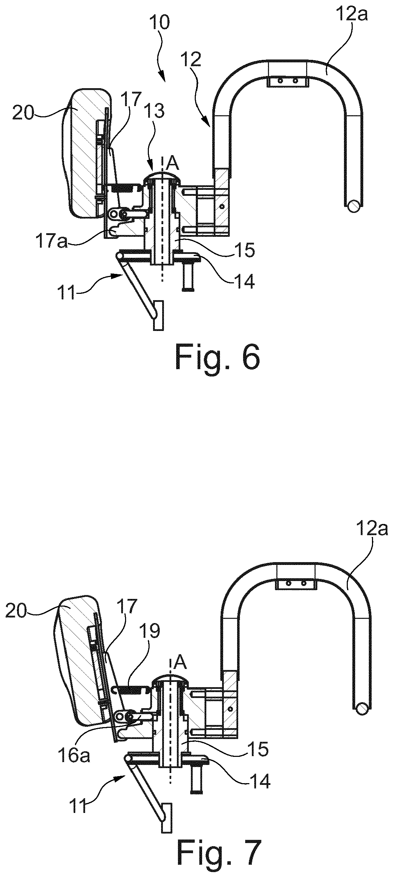

It also arises from figures 1 and 2 how, in the case of the embodiment therein depicted, the support means 12 (and therefore the suitcases 100 or trunks 200) are rotatable about a substantially vertical axis; to this end, it is worth noting how the fastening structure 11 comprises adjustment means (not depicted) adapted to allow the adjustment of the orientation of the axis of rotation (identified by letter A in figures 6 and 7) of the support means 12, and therefore to position the axis of rotation A according to the needs and/or circumstances, in particular to the motorcycle type, on the longitudinal symmetry plane and oriented vertically, at least with motorcycle 300 under still or stopped condition. It is also worth noting that the definition of longitudinal symmetry plane of the motorcycle means the longitudinal symmetry plane of the symmetrical parts of the motorcycle itself, such as for example the tank, the rear wheel, the saddle and/or the main fairing.

In order to obtain the above results, in particular the rotation of the support means 12 and the positioning thereof in the aforesaid two positions, the device **10** according to the embodiment of the present invention advantageously comprises guide means **13** of the rotation of said support means **12.**

Said guide means 13 of the rotation of said support means **12** are in particular configured to allow the movement of said support means **12**, thus allowing the rotation thereof about a vertical axis of rotation A.

For this purpose, said rotation guide means **13** comprise at least one body or element **15** with at least one cylindrical portion which longitudinal symmetry axis coincides with the axis of rotation of said support means of said suitcase or trunk, said support means **12** being rotatably associated with (engaged on said cylindrical portion of) said body **15** by means of a system of bearings (in themselves known and therefore not described in detail) in order to sustain the axial thrust and to allow the rotation about axis **A** identified by said rotation guide element 15.

More specifically, said fastening structure **11** to the vehicle comprises a base body **14** configured so as to be substantially horizontal with respect to the ground when the device is installed on the motorcycle (and the motorcycle is not running), and said support means **12** are rotatably associated with said guide means **13**, thus being rotatable with respect to said guide means **13.**

According to the embodiment depicted by way of example in the accompanying figures, the longitudinal axis of the cylindrical portion of body **15** is substantially perpendicular to said base body **14** of said fastening structure **11** to the vehicle and precisely coincides with the axis of rotation of said support means **12.**

According to the embodiment of the present invention depicted by way of a non-limiting example in the accompanying drawings, the device **10** according to the present invention further comprises locking means **16** operable by the user, which are adapted to selectively lock the rotation of said support means **12**, in particular to selectively lock the support means 12 in the aforesaid two positions.

Preferably, said cylindrical body **15** comprises a base rigidly fixed to the fastening structure 10 and from which the aforesaid cylindrical portion extends, and said locking means **16** comprise at least one locking pin **16a** and at least a first engagement seat **15a** formed on the outer surface of said base of said body **15.**

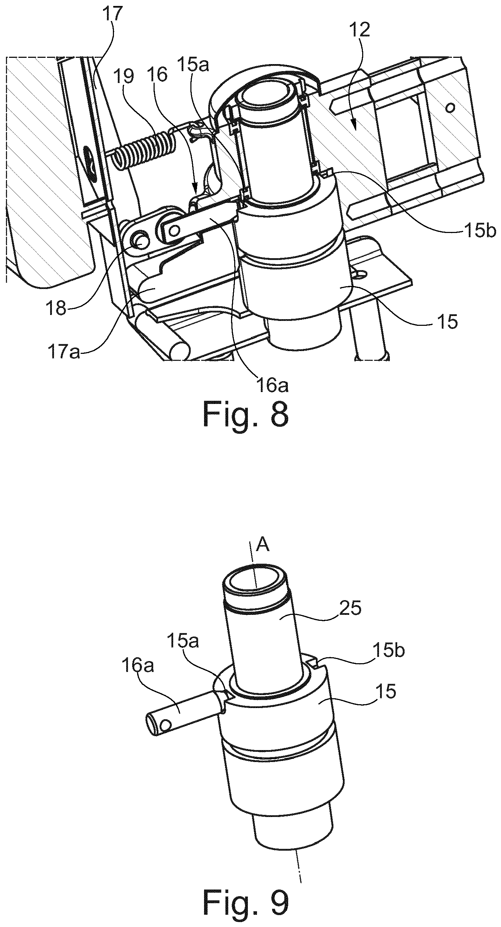

Said at least one locking pin **16a** in particular is movable (switchable) between a locked position (depicted in figures 6 and 8), in which said locking pin **16a** precisely engages the corresponding seat **15a** formed on said body **15**, and a released position (depicted in figure 7), in which said locking pin **16a** is disengaged from said seat **15a**, so that said support means **12** are free to rotate about the axis of rotation **A.**

Advantageously, said locking means further comprise a second seat **15b** adapted to be engaged by said locking pin **16a** and formed on the outer surface of said body **15** in a diametrically opposite position with respect to said first seat **15a.**

Now to describe in greater detail the operation of device **10** according to the embodiment of the present invention depicted in the figures, it is worth first noting the condition in figure 6 in which said support means **12** are locked, with respect to the rotation, by the engagement of pin **16a** with said first seat **15a.**

Starting from the aforesaid locked condition, the user may manually act on said locking means, in particular on said pin **16a**, thus causing its disengagement from said first seat **15a**, and therefore releasing the support means 12 from pin 15, in particular making them rotatable with respect to pin 15. At this point, the support means **12** may be manually rotated about the axis of rotation **A** identified by the body **15**, up to said aforesaid second position in which said pin **16a** is positioned at the second seat **15b**, in which it may be engaged, thus locking the support means **12** in the new second position, which is diametrically opposite to the first position. With reference to the accompanying drawings, in particular to figures 6 and 7, according to one embodiment of the present invention, said locking means **16** are operable by the user by means of a lever **17.**

Preferably, said lever **17** is rotatably hinged by means of a hinge **17a** to a portion of said support means **12**, and therefore rotates therewith during the rotation of the means 12 about pin 15 according to the methods described above, and the rotation of said lever **17** about said hinge **17a** in a first direction of rotation, in particular away from the support means **12**, takes place by counteracting the action of elastic return means (for example, as depicted, one or more helical return springs **19)** and results in a translation of pin 16a in a first translation direction of disengagement from the corresponding engagement seat (15a or 15b, according to the actual position of the support means 12). Then, with pin 16a being disengaged from the engagement seat 15a or 15b, the support means 12 may be rotated on pin 15 up to positioning the pin or latch 16a at the seat which is diametrically opposite to the seat from which it was released, wherein it is pulled (together with lever 17) by the elastic return means 19, thus precisely engaging the new engagement seat.

Said locking pin **16a** of said locking means **16** is also connected on said lever **17**, also in this case with a connection which comprises a hinge.

More specifically, according to that shown in figures 6 and 7, lever **17** is hinged at hinge **17a** arranged at an end of said lever **17**, wherein said return spring **19** is connected to a point of said lever **17** which is far from said constraining and/or hinging end of said lever **17**, and said locking pin **16a** is connected to said lever **17** at an intermediate point between said hinge **17a** and said spring **19**.

Due to this configuration, the user may grip the free end of lever **17**, which is opposite to the end hinged at **17a**, and pulling outwardly, that is in the direction moving away from the axis of rotation **A**, opposing the force exerted by the return spring **19**, may release pin **16a** from said first seat **15a**.

The possibility also remains of using torsion springs which can be positioned on the axis of hinge **17a**, and/or compressions springs which can be positioned between lever **17** and body **15** in the part below the axis of hinge **17a**.

At this point, as indicated above, the user may manually accompany the support means **12** in the rotation thereof on pin 15 about axis **A** up to bringing said locking pin **16a** at the second seat **15b**, which is diametrically opposite to the first seat **15a**, thus performing a rotation of the support means **12** themselves.

Once the rotation of the support means **12** is complete, the locking pin autonomously engages the second seat **15b** because, as indicated above, lever **17**, and accordingly the locking pin, are pulled by the return spring **19**. Therefore, the automatic locking of the support means **12** is achieved when the rotated position is achieved with respect to the starting position.

Naturally, with an identical procedure the user may rotate the support means **12** again, thus returning them to the initial position in which the locking pin **16a** is inserted into the first seat **15a**.

The device **10** according to the present invention therefore rather easily allows the user to rotate the support means **12** between a first position (depicted in figure 1) in which said suitcases **100** or trunks **200** are positioned so as to protrude in longitudinal direction and rearwardly from vehicle **300**, and a second position (depicted in figure 2) in which said suitcases **100** or trunks **200** are positioned within the outline of vehicle **300**, at least in longitudinal direction, and above the rear portion of the vehicle frame, in particular where the portion of saddle dedicated to the passenger is located.

Advantageously, as depicted in particular in the assembly views in figures 1 and 2, and in greater detail in figures 6 and 7, a support element **20** (essentially a backrest) may be associated with said lever **17** which allows the passenger's back to be supported when the device is used in the configuration of figure 1, in which said suitcases **100** or trunk **200** are positioned so as to protrude rearwardly from vehicle **300.** Preferably, such a support element **20** consists of an ergonomically shaped element so as to improve the comfort for the passenger, even more preferably it may be made of material soft to the touch and/or adequately padded.

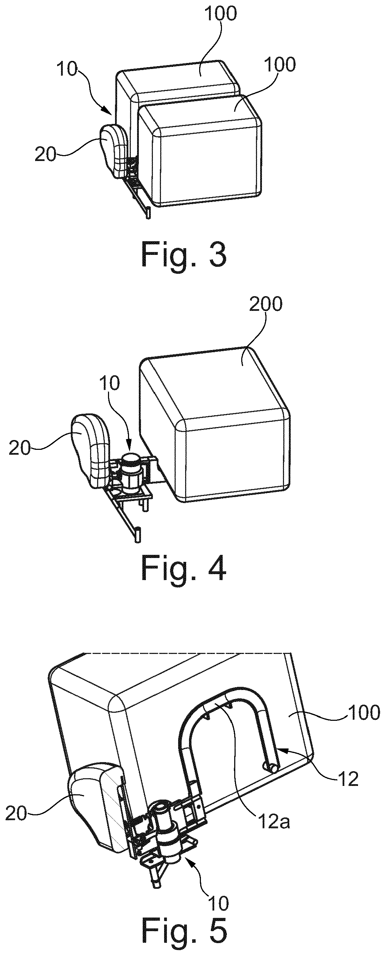

According to the preferred embodiment of the present invention shown by way of a non-limiting example in the accompanying drawings, the support means **12** comprise a support bar **12a**, which essentially is arc-shaped, for example having a circular or square or rectangular cross section, configured so that when said fastening structure **11** is fixed to the vehicle, said support bar **12a** substantially is positioned at the centerline axis of the vehicle so as to support a first suitcase **100** constrained laterally to said support bar **12a** and a second suitcase **100** again constrained laterally to said support bar **12a** on the side opposite to said bar, as shown for example in figure 3.

Thereby, among the other advantages already resulting from the description of device 10 according to the present invention, the further results are obtained of being able to mount a pair of suitcases on a motorcycle, within the outline of the vehicle itself, which suitcases usually are mounted with known systems on the side of the vehicle itself, thus protruding laterally from the outline of the vehicle. Therefore, in the case of a pair of travel suitcases, the advantages achievable from the device according to the present invention in terms of reducing the volumes both when the vehicle is stopped, still or moving, improved maneuverability of the means during the maneuvering steps at reduced speed, and improved driving dynamics at a faster speed, are even more appreciated.

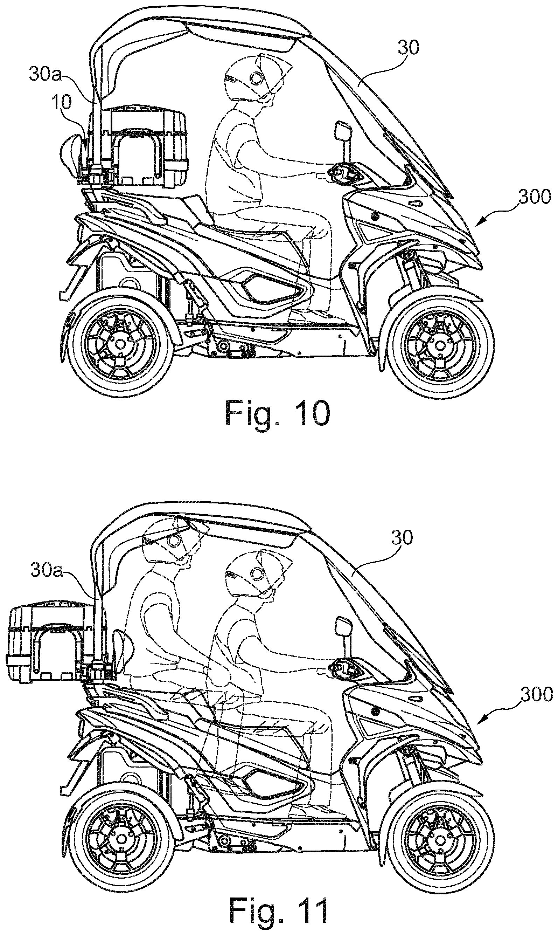

Not lastly, the device according to the present invention allows, in particular when mounted on motorcycles intended to be used in the city such as scooters and other three-or four-wheel vehicles with at least one pair of wheels on the same tilting axis, acting as a support for fastening a further accessory, that is a covering top 30 of the vehicle, as shown for example in the assembly views in figures 10 and 11.

Here, the axial shaft **25** itself of the guide element **15** advantageously may act as a support.

## Claims

1. A case holder and/or luggage holder device (10) for motorcycles (300), said device (10) comprising a fastening structure (11) for fastening said device (10) to a motorcycle (300), and support means (12) for the support of at least one trunk (200) or at least one suitcase (100), wherein with said device (10) fastened to said motorcycle (300), said support means (12) are adapted to be rotated with respect to said fastening structure (11) according to an axis of rotation (A) between a first position in which said support means (12) and said at least one trunk (200) or said at least one suitcase (100) are adapted to be positioned so as to protrude rearwardly with respect to the motorcycle (300) and at least partly outside of the outline of the motorcycle (300), and a second position in which said support means (12) and said at least one trunk (200) or said at least one suitcase (100) are adapted to be positioned within the outline of the motorcycle (300), on the rear portion of the frame of the motorcycle (300), wherein said fastening structure (11) comprises a rotation element or pin (15), wherein said support means (12) are fastened to said rotation element or pin (15) and are adapted to be rotated with respect to said rotation element or pin (15) between said first position and said second position, wherein said fastening structure (11) comprises adjustment means for adjusting the orientation of the axis of rotation (A) of said support means (12), and wherein said adjustment means are configured so as to allow the orientation of the axis of rotation (A) of said support means (12) so that, with said device (10) fastened to said motorcycle (300), said axis of rotation (A) can be oriented so as to substantially lie on the longitudinal symmetry plane of said motorcycle (300), in particular said axis of rotation (A) can be oriented so as to be substantially vertical with said motorcycle (300) under still or stopped condition, **characterized in that** said device (10) further comprises locking means (16) operable by the user and adapted to selectively lock said support means (12) in said first position and said second position.

2. A device (10) according to claim 1, **characterized in that**, in said second position, with said device (10) fastened to said motorcycle (300), said support means (12) and said at least one trunk (200) or said at least one suitcase (100) are adapted to be positioned within the outline of the motorcycle (300), on the rear portion of the saddle of the motorcycle (300) reserved for the passenger.

3. A device (10) according to claim 1 or 2, **characterized in that** said rotation element or pin (15) comprises at least one cylindrical portion, and **in that** the axis of rotation (A) of said support means (12) coincides with the longitudinal symmetry axis of said at least one cylindrical portion of said rotation element or pin (15).

4. A device (10) according to one of the preceding claims 1 to 3, **characterized in that** said locking means (16) comprise at least one first engagement seat (15a) and a second seat (15b) formed on the outer surface of said rotation element or pin (15) and at least one movable locking pin (16a) adapted to selectively engage said at least one first engagement seat (15a) and said second seat (15b) and to be selectively disengaged from said at least one first engagement seat (15a) and said second seat (15b).

5. A device (10) according to the preceding claim 4, **characterized in that** it further comprises a lever (17) operable by the user for the manual operation of said at least one movable locking pin (16a).

6. A device (10) according to the preceding claim 5, **characterized in that** said lever (17) is rotatably constrained to a portion of said support means (12) and is connected to said at least one movable locking pin (16a) so that the rotation of said lever (17) in two opposite directions of rotation is adapted to result in the disengagement of said at least one movable locking pin (16a) from said at least one first engagement seat (15a) or said second seat (15b) and in the engagement of said at least one first engagement seat (15a) or said second seat (15b) by said at least one movable locking pin (16a), respectively.

7. A device according to claim 6, **characterized in that** said locking means (16) comprise elastic return means (19), and **in that** the rotation of said lever (17) in a first direction of rotation aiming to disengage said at least one movable locking pin (16a) from said at least one first engagement seat (15a) or said second seat (15b) is adapted to occur against the resistance exerted by said return means (19), while the rotation of said lever (17) in the opposite direction of rotation is adapted to be facilitated by the elastic return action exerted by said return means (19).

8. A device (10) according to one of claims 5 to 7, **characterized in that** it further comprises, associated with said lever (17), a support element (20) which, with said support means (12) in said second position, is adapted to support the back of a passenger on the vehicle.

9. A device (10) according to any one of the preceding claims, **characterized in that** said fastening structure (11) comprises fastening means (25) adapted to allow the fastening of a top (30) for covering the motorcycle (300).

10. A device according to one of claims 1 to 9, **characterized in that** said support means (12) comprise an arc-shaped support portion (12a) which defines a main symmetry plane, and **in that** said arc-shaped support portion (12a) is adapted to support said at least one trunk (200) or said at least one suitcase (100) on each of the two opposite sides with respect to said main symmetry plane.

11. A motorcycle (300) comprising a device (10) according to any one of claims 1 to 10.

## Patentansprüche

1. Behälter- und/oder Gepäckhaltevorrichtung (10) für Motorräder (300), wobei die Vorrichtung (10) eine Befestigungskonstruktion (11) zum Befestigen der Vorrichtung (10) an einem Motorrad (300) sowie eine Stützvorrichtung (12) zum Stützen mindestens eines Kastens (200) oder mindestens eines Koffers (100) aufweist, wobei die Stützvorrichtung (12) bei an dem Motorrad (300) befestigter Vorrichtung (10) dazu ausgelegt ist, bezüglich der Befestigungskonstruktion (11) um eine Schwenkachse (A) zu schwenken zwischen einer ersten Stellung, in der die Stützvorrichtung (12) und der mindestens eine Kasten (200) oder der mindestens eine Koffer (100) so angeordnet werden können, dass sie sich bezüglich des Motorrades (300) nach hinten ragend erstrecken und zumindest teilweise außerhalb des Umrisses des Motorrades liegen, und einer zweiten Stellung, in der die Stützvorrichtung (12) und der mindestens eine Kasten (200) oder der mindestens eine Koffer (100) innerhalb des Umrisses des Motorrades (300) am hinteren Teil des Rahmens des Motorrades (300) angeordnet werden können, wobei die Befestigungskonstruktion (11) ein Schwenkelement/ einen Bolzen (15) aufweist, wobei die Stützvorrichtung (12) an dem Schwenkelement/ dem Bolzen (15) befestigt ist und bezüglich des Schwenkelements / des Bolzens (15) zwischen der ersten Stellung und der zweiten Stellung verschwenkbar ist, wobei die Befestigungskonstruktion (11) Einstellmittel zum Einstellen der Ausrichtung der Schwenkachse (A) der Abstützvorrichtung (12) aufweist, und wobei die Einstellmittel derart ausgestaltet sind, dass sie die Ausrichtung der Schwenkachse (A) der Stützvorrichtung (12) derart ermöglichen, dass bei an dem Motorrad (300) befestigter Vorrichtung (10) die Schwenkachse (A) so ausgerichtet werden kann, dass sie im Wesentlichen auf der Längssymmetrieebene des Motorrads (300) liegt, die Schwenkachse (A) insbesondere derart ausgerichtet werden kann, dass sie im Wesentlichen senkrecht steht, wenn sich das Motorrad (300) im Stillstand befindet, **dadurch gekennzeichnet, dass** die Vorrichtung (10) weiter vom Benutzer bedienbare Verriegelungsmittel (16) aufweist, die dazu ausgelegt sind, die Stützvorrichtung (12) wahlweise in der ersten oder der zweiten Stellung zu verriegeln.

2. Vorrichtung (10) nach Anspruch 1, **dadurch gekennzeichnet, dass** in der zweiten Stellung bei an dem Motorrad (300) befestigter Vorrichtung (10) die Stützvorrichtung (12) und der mindestens eine Kasten (200) oder der mindestens eine Koffer (100) dazu ausgelegt sind, innerhalb des Umrisses des Motorrads (300) auf dem für den Beifahrer reservierten hinteren Teil des Sattels des Motorrads (300) angeordnet zu werden.

3. Vorrichtung (10) nach Anspruch 1 oder 2, **dadurch gekennzeichnet, dass** das Schwenkelement / der Bolzen (15) mindestens einen zylindrischen Abschnitt aufweist und dass die Schwenkachse (A) der Stützvorrichtung (12) mit der Längssymmetrieachse des mindestens einen zylindrischen Abschnitts des Schwenkelements / des Bolzens (15) zusammenfällt.

4. Vorrichtung (10) nach einem der vorangehenden Ansprüche 1 bis 3, **dadurch gekennzeichnet, dass** das Verriegelungsmittel (16) mindestens eine auf der Außenseite des Schwenkelements / des Bolzens (15) ausgebildete erste Einrastaufnahme (15a) und eine zweite Aufnahme (15b) und mindestens einen beweglichen Sperrbolzen (16a) aufweist, der dazu ausgelegt ist, wahlweise mit mindestens einer ersten Einrastaufnahme (15a) und der zweiten Aufnahme (15b) in Eingriff zu kommen und wahlweise von der mindestens einen ersten Einrastaufnahme (15a) und der zweiten Aufnahme (15b) gelöst zu werden.

5. Vorrichtung (10) nach dem vorangehenden Anspruch 4, **dadurch gekennzeichnet, dass** sie weiter einen Hebel (17) aufweist, der von dem Benutzer zur manuellen Bedienung des mindestens einen beweglichen Sperrbolzens (16a) betätigbar ist.

6. Vorrichtung (10) nach dem vorangehenden Anspruch 5, **dadurch gekennzeichnet, dass** der Hebel (17) auf einen Bereich der Stützvorrichtung (12) begrenzt verschwenkbar ist und mit dem mindestens einen beweglichen Sperrbolzen (16a) verbunden ist, so dass das Verschwenken des Hebels (17) in zwei entgegengesetzte Schwenkrichtungen die Entkopplung des mindestens einen beweglichen Sperrbolzens (16a) von der mindestens einen ersten Einrastaufnahme (15a) oder der zweiten Aufnahme (15b) beziehungsweise die Verbindung der mindestens einen ersten Einrastaufnahme (15a) oder der zweiten Aufnahme (15b) mit dem mindestens einen beweglichen Sperrbolzen (16a) bewirkt.

7. Vorrichtung nach Anspruch 6, **dadurch gekennzeichnet, dass** das Verriegelungsmittel (16) elastische Rückstellmittel (19) aufweist und dass das Verschwenken des Hebels (17) in einer ersten Schwenkrichtung, die auf das Lösen des mindestens einen beweglichen Sperrbolzens (16a) von der mindestens einen ersten Einrastaufnahme (15a) oder der zweiten Aufnahme (15b) abzielt, dazu ausgelegt ist, gegen den von den Rückstellmitteln (19) ausgeübten Widerstand zu erfolgen, während das Verschwenken des Hebels (17) in der entgegengesetzten Schwenkrichtung durch die von den Rückstellmitteln (19) ausgeübte elastische Rückstellkraft erleichtert werden kann.

8. Vorrichtung (10) nach einem der Ansprüche 5 bis 7, **dadurch gekennzeichnet, dass** sie weiter ein mit dem Hebel (17) verbundenes Stützelement (20) aufweist, welches, wenn sich die Stützvorrichtung (12) in der zweiten Stellung befindet, dazu ausgelegt ist, den Rücken eines auf dem Fahrzeug befindlichen Beifahrers zu stützen.

9. Vorrichtung (10) nach einem der vorangehenden Ansprüche, **dadurch gekennzeichnet, dass** die Befestigungskonstruktion (11) Befestigungsmittel (25) aufweist, die dazu ausgelegt sind, die Befestigung eines Verdecks (30) zum Abdecken des Motorrads (300) zu erlauben.

10. Vorrichtung nach einem der Ansprüche 1 bis 9, **dadurch gekennzeichnet, dass** die Stützvorrichtung (12) einen bogenförmigen Stützbereich (12a) aufweist, welcher eine Hauptsymmetrieebene festlegt, und dass der bogenförmige Stützbereich (12a) dazu ausgelegt ist, den mindestens einen Kasten (200) oder den mindestens einen Koffer (100) auf jeder der einander entgegengesetzten Seiten bezüglich der Hauptsymmetrieebene zu stützen.

11. Motorrad (300), aufweisend eine Vorrichtung (10) nach einem der Ansprüche 1 bis 10.

## Revendications

1. Dispositif porte-valise et/ou porte-bagages (10) pour motocycles (300), ledit dispositif (10) comprenant une structure de fixation (11) destinée à fixer ledit dispositif (10) à un motocycle (300), et des moyens de support (12) destinés à soutenir au moins une malle (200) ou au moins une valise (100), dans lequel avec ledit dispositif (10) fixé audit motocycle (300), lesdits moyens de support (12) sont adaptés pour être mis en rotation par rapport à ladite structure de fixation (11) selon un axe de rotation (A) entre une première position, dans laquelle lesdits moyens de support (12) et ladite malle (200), au moins au nombre de une, ou ladite valise (100), au moins au nombre de une, sont adaptées pour être positionnés de façon à dépasser vers l'arrière par rapport au motocycle (300) et au moins en partie en dehors du contour du motocycle (300), et une seconde position, dans laquelle lesdits moyens de support (12) et ladite malle (200), au moins au nombre de une, ou ladite valise (100), au moins au nombre de une, sont adaptés pour être positionnés au sein du contour du motocycle (300), sur la portion arrière du cadre du motocycle (300), dans lequel ladite structure de fixation (11) comprend un élément ou goupille de rotation (15), dans lequel lesdits moyens de support (12) sont fixés audit élément ou goupille de rotation (15) et sont adaptés pour être mis en rotation par rapport audit élément ou goupille de rotation (15) entre ladite première position et ladite seconde position, dans lequel ladite structure de fixation (11) comprend des moyens de réglage permettant de régler l'orientation de l'axe de rotation (A) desdits moyens de support (12), et dans lequel lesdits moyens de réglage sont configurés de façon à permettre l'orientation de l'axe de rotation (A) desdits moyens de support (12) de sorte que, avec ledit dispositif (10) fixé audit motocycle (300), ledit axe de rotation (A) puisse être orienté de façon à se trouver sensiblement sur le plan de symétrie longitudinal dudit motocycle (300), et que ledit axe de rotation (A) puisse en particulier être orienté de façon à être sensiblement vertical quand ledit motocycle (300) se trouve dans un état immobile ou à l'arrêt, **caractérisé en ce que** ledit dispositif (10) comprend en outre des moyens de verrouillage (16) actionnables par l'utilisateur et adaptés pour verrouiller sélectivement lesdits moyens de support (12) dans ladite première position et ladite seconde position.

2. Dispositif (10) selon la revendication 1, **caractérisé en ce que**, dans ladite seconde position, avec ledit dispositif (10) fixé audit motocycle (300), lesdits moyens de support (12) et ladite malle (200), au moins au nombre de une, ou ladite valise (100), au moins au nombre de une, sont adaptés pour être positionnés au sein du contour du motocycle (300), sur la portion arrière de la selle du motocycle (300) réservée au passager.

3. Dispositif (10) selon la revendication 1 ou 2, **caractérisé en ce que** ledit élément ou goupille de rotation (15) comprend au moins une portion cylindrique, et **en ce que** l'axe de rotation (A) desdits moyens de support (12) coïncide avec l'axe de symétrie longitudinal de ladite portion cylindrique, au moins au nombre de une, dudit élément ou goupille de rotation (15).

4. Dispositif (10) selon l'une des revendications 1 à 3 précédentes, **caractérisé en ce que** lesdits moyens de verrouillage (16) comprennent au moins un premier siège d'engagement (15a) et un second siège (15b) formés sur la surface extérieure dudit élément ou goupille de rotation (15) et au moins une goupille de verrouillage mobile (16a) adaptée pour s'engager sélectivement avec ledit premier siège d'engagement (15a), au moins au nombre de un, et ledit second siège (15b) et pour être sélectivement désengagée dudit premier siège d'engagement (15a), au moins au nombre de un, et dudit second siège (15b).

5. Dispositif (10) selon la revendication 4 précédente, **caractérisé en ce qu'**il comprend en outre un levier (17) actionnable par l'utilisateur pour l'actionnement manuel de ladite goupille de verrouillage mobile (16a), au moins au nombre de une.

6. Dispositif (10) selon la revendication 5 précédente, **caractérisé en ce que** ledit levier (17) est contraint en rotation sur une portion desdits moyens de support (12) et est raccordé à ladite goupille de verrouillage mobile (16a), au moins au nombre de une, de sorte que la rotation dudit levier (17) dans deux directions de rotation opposées soit adaptée pour aboutir au dégagement de ladite goupille de verrouillage mobile (16a), au moins au nombre de une, dudit premier siège d'engagement (15a), au moins au nombre de un, ou dudit second siège (15b), et à l'engagement dudit premier siège d'engagement (15a), au moins au nombre de un, ou dudit second siège (15b) avec ladite goupille de verrouillage mobile (16a), au moins au nombre de une, respectivement.

7. Dispositif selon la revendication 6, **caractérisé en ce que** lesdits moyens de verrouillage (16) comprennent des moyens de rappel élastiques (19), et **en ce que** la rotation dudit levier (17) dans une première direction de rotation visant à désengager ladite goupille de verrouillage mobile (16a), au moins au nombre de une, dudit premier siège d'engagement (15a), au moins au nombre de un, ou dudit second siège (15b) est adaptée pour se produire contre la résistance exercée par lesdits moyens de rappel (19), tandis que la rotation dudit levier (17) dans la direction de rotation opposée est adaptée pour être facilitée par l'action de rappel élastique exercée par lesdits moyens de rappel (19).

8. Dispositif (10) selon l'une des revendications 5 à 7, **caractérisé en ce qu'**il comprend en outre, associé audit levier (17), un élément de support (20) qui, avec lesdits moyens de support (12) dans ladite seconde position, est adapté pour soutenir le dos d'un passager sur le véhicule.

9. Dispositif (10) selon l'une quelconque des revendications précédentes, **caractérisé en ce que** ladite structure de fixation (11) comprend des moyens de fixation (25) adaptés pour permettre la fixation d'un toit (30) destiné à couvrir le motocycle (300).

10. Dispositif selon l'une des revendications 1 à 9, **caractérisé en ce que** lesdits moyens de support (12) comprennent une portion de support en forme d'arc (12a) qui définit un plan de symétrie principal, et **en ce que** ladite portion de support en forme d'arc (12a) est adaptée pour soutenir ladite malle (200), au moins au nombre de une, ou ladite valise (100), au moins au nombre de une, sur chacun des deux côtés opposés par rapport audit plan de symétrie principal.

11. Motocycle (300) comprenant un dispositif (10) selon l'une quelconque des revendications 1 à 10.
